# EUROPEAN PATENT APPLICATION

(11) **EP 3 919 790 A1**
(43) Date of publication of application: **08.12.2021**
(21) Application number: 20832521.7
(22) Date of filing: 23.06.2020
(51) Int. Cl.: F16K 11/087, F16K 5/06, F16K 5/08, F16K 31/00

(54) **THREE-WAY WATER VALVE**

(30) Priority: 24.06.2019 CN 201920957520 U
(71) Applicant: Zhejiang Dunan Artificial Environment Co., Ltd., Shaoxing Zhejiang 311835 (CN)
(72) Inventor: YU, Zhou, Shaoxing, Zhejiang 311835 (CN); YE, XiaoHong, Shaoxing, Zhejiang 311835 (CN); LIN, YuanYang, Shaoxing, Zhejiang 311835 (CN)
(74) Representative: Petraz, Gilberto Luigi
(86) International application number: PCT/CN2020/097567
(87) International publication number: WO 2020/259458

(57) **Abstract**

A three-way water valve (100), comprising a valve seat (10), a valve core (20) provided in the valve seat (10), and a valve bonnet (30) covering the valve seat (10). An actuator (40) is fixed on the valve bonnet (30), and the actuator (40) can drive the valve core (20) to rotate in the valve seat (10); a rotating shaft (41) is rotatably connected to a driving portion (42) of the actuator (40), one end of the rotating shaft (41) is connected to the valve core (20) as a whole, and the driving portion (42) can circumferentially limit the rotating shaft (41).

## Description

### CROSS-REFERENCE TO RELATED APPLICATIONS

This application claims all benefits of the priority from China Patent Application No. 201920957520.X, filed on June24, 2019, titled "THREE-WAY WATER VALVE" in the China National Intellectual Property Administration, the content of which is hereby incorporated by reference.

### TECHNICAL FIELD

The present disclosure generally relates to a technical field of flow control, and in particular, to a three-way water valve.

### BACKGROUND

A valve seat of a three-way water valve has three connecting ports, one of which is an inlet, and the other two are outlets. When the three-way water valve is operated, a valve core of the three-way water valve rotates in the valve seat, and can switch paths between the inlet and the two outlets of the valve seat selectively, so as to control flow.

A conventional three-way water valve usually includes a rotating shaft and a valve core disposed separately. The rotating shaft is configured to drive the valve core to rotate in a valve seat. Specifically, a groove is disposed on the valve core, the rotating shaft inserts into the groove of the valve core and circumferentially limited with the valve core, resulting in that an actuator can drive the valve core to rotate in the valve seat by the rotating shaft when the three-way water valve is operated.

The above three-way water valve can realize a switch of paths between an inlet and two outlets on the valve seat. However, the rotating shaft inserts into the groove of the valve core and cooperates with the valve core to realize the rotation of the valve core in the valve seat, i.e., clearance fit is formed between the rotating shaft and the valve core, resulting in that a connecting strength between the rotating shaft and the valve core is weak. During a long-term use, the rotating shaft and the valve are prone to wear, so as to reduce a rotation accuracy of the valve core.

### SUMMARY

According to embodiments of the present disclosure, a three-way water valve is provided. The three-way water valve includes a valve seat, a valve core, a valve bonnet, and an actuator.

The valve core is disposed in the valve seat, the valve bonnet covers the valve seat, and the actuator is fixed on the valve bonnet. The three-way water valve further includes a rotating shaft connected with the valve core as a whole, a first end of the rotating shaft is disposed on the valve core, a second end of the rotating shaft is rotatably connected with the driving portion, and the driving portion is capable of circumferentially limiting the rotating shaft.

In the three-way water valve, the rotating shaft and the valve core are disposed as an integrated structure, resulting in strengthening a connecting strength between the rotating shaft and the valve core, avoiding phenomena of wearing between the rotating shaft and the valve core if the rotating shaft and the valve core are a split structure, and preventing affecting a rotation accuracy of the valve core. At the same time, the integrated structure can ensure that the valve core can rotate with the rotating shaft, so as to improve the rotation accuracy of the valve core.

In an embodiment of the present disclosure, the rotating shaft is provided with a first limiting portion, and the driving portion is provided with a second limiting portion. When the rotating shaft is assembled and connected with the driving portion, the first limiting portion is capable of matching with the second limiting portion. In this way, the driving portion can circumferentially limit the rotating shaft by the matching between the first limiting portion and the second limiting portion.

In an embodiment of the present disclosure, the first limiting portion is a positioning bulge located on an outer lateral wall of the rotating shaft, and the second limiting portion is a position groove located on the driving portion. In this way, the structure of the first limiting portion and the structure of the second limiting portion are simple.

In an embodiment of the present disclosure, a first guiding member is disposed between the valve core and the valve seat, a second guiding member is disposed between the valve core and the valve bonnet, the valve core is provided with a first guiding portion matched with the first guiding member, and a second guiding portion matched with the second guiding member respectively. In this way, when the valve core is rotating, the matching of the first guiding member and the first guiding portion and the matching of the second guiding member and the second guiding portion can play a guiding role for the rotation of the valve core, so as to reduce a friction force generated when the valve core rotates and extend service life of the valve core.

In an embodiment of the present disclosure, the first guiding member and the second guiding member are slidably connected with the valve core respectively, and the first guiding member and the second guiding member comprise a sealing ring respectively.

In an embodiment of the present disclosure, the first guiding member and the second guiding member comprise a bearing respectively.

In an embodiment of the present disclosure, a bottom surface of the valve core is provided with a first connecting port, a side wall of the valve core is provided with a second connecting port, and the first connecting port is communicating with the second connecting port.

In an embodiment of the present disclosure, a cross section of the second connecting port is in a shape of square, and the valve seat is provided with a first valve port and a second valve port. The valve core can be communicating with the first valve port and the second valve port at the same time by the second connecting port. In this way, a cross section of the valve core is in a shape of square, and the cross section of the second connecting port is the same as that of the valve core, resulting in that an inner cavity of the valve core is sufficiently used and a circulation area of the inner cavity is as large as possible to increase a circulation flux.

In an embodiment of the present disclosure, the first valve port and the second valve port are both provided with a first sealing member and a second sealing member, resulting in that the valve core and the valve seat are sealing connected with each other. In this way, the sealing effect between the valve core and the valve seat is improved.

In an embodiment of the present disclosure, the first sealing member includes a sealing gasket, the second sealing member includes an O-shaped ring, the sealing gasket is disposed on the valve seat, the O-shaped ring is embedded in a first end surface of the sealing gasket which abuts against the valve seat, and a second end surface away from the O-shaped ring of the sealing gasket abuts against the valve core. In this way, the structure of the first sealing member and the structure of the second sealing member are simple.

In an embodiment of the present disclosure, the first sealing member is disposed closed to the valve core, a first sealing convex portion is disposed on an end of the first sealing member closed to the first valve port or the second valve port, and the first sealing convex portion is capable of abutting against the valve core. In this way, an acting force of the first sealing member on the valve core is strengthened, further improving a sealing effect.

### BRIEF DESCRIPTION OF THE DRAWINGS

To describe and illustrate embodiments and/or examples of the present disclosure made public here better, reference may be made to one or more of the figures. The additional details or examples used to describe the figures should not be construed as limiting the scope of any of the present disclosure, the embodiments and/or examples currently described, and the best model of the present disclosure as currently understood.
FIG. 1 is a structural explosion diagram of a three-way water valve in an embodiment of the present disclosure.
FIG. 2 is a cross sectional diagram of a three-way water valve in an embodiment of the present disclosure.
FIG. 3 is a schematic diagram of a first connecting branch pipe and a second connecting branch pipe being in communication with each other in an embodiment of the present disclosure.
FIG. 4 is a schematic diagram of a first connecting branch pipe being in communication with a second connecting branch pipe and a third the connecting branch pipe at the same time in an embodiment of the present disclosure.
FIG. 5 is a schematic diagram of a first connecting branch pipe being in communication with a third connecting branch pipe with each other in an embodiment of the present disclosure.
FIG. 6 is a schematic diagram of a valve seat of a three-way water valve in an embodiment of the present disclosure.
FIG. 7 is an assembled diagram of a valve core and a rotating shaft of a three-way water valve in an embodiment of the present disclosure.
FIG. 8 is an assembled diagram of a first valve port and a second valve port of a three-way water valve in an embodiment of the present disclosure.

In the figures:
100 represents a three-way water valve, 10 represents a valve seat, 11 represents a first connecting branch pipe, 12 represents a second connecting branch pipe, 13 represents a third connecting branch pipe, 14 represents a first valve port, 15 represents a second valve port, 20 represents a valve core, 21 represents a first connecting port, 22 represents a second connecting port, 23 represents a guiding portion, 30 represents a valve bonnet, 40 represents an actuator, 41 represents a rotating shaft, 411 represents a first limiting portion, 412 represents a positioning bulge, 42 represents a driving portion, 421 represents a second limiting portion, 422 represents a positioning groove, 102 represents a sealing gasket, 103 represents an O-shaped ring, 104 represents a guiding member, 105 represents a sealing groove, 201 represents a first sealing member, 202 represents a second sealing member, 203 represents a first sealing convex portion, 204 represents a first sealing groove, 205 represents a second sealing convex portion.

### DETAILED DESCRIPTION

The present disclosure will be further described in detail below, in order to better understand the present disclosure. However, the present disclosure may be implemented in many different forms and is not limited to the embodiments described herein. Rather, these embodiments are provided in order to provide a more complete understanding of the present disclosure.

It should be noted that when an element is considered to be "fixed to" another element, it can be directly fixed to another element, or there can be a centered element. When an element is considered to be "connected with" another element, it can be connected directly with another element or there may be a centered element at the same time.

Unless otherwise defined, all technical and scientific terms used herein have the same meaning as a skilled person in the art would understand. The terminology used in the description of the present disclosure is for the purpose of describing particular embodiments and is not intended to limit the disclosure.

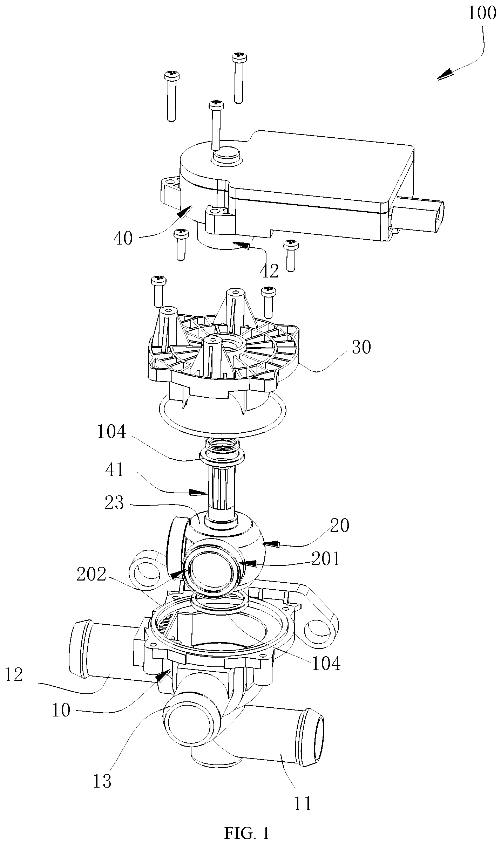

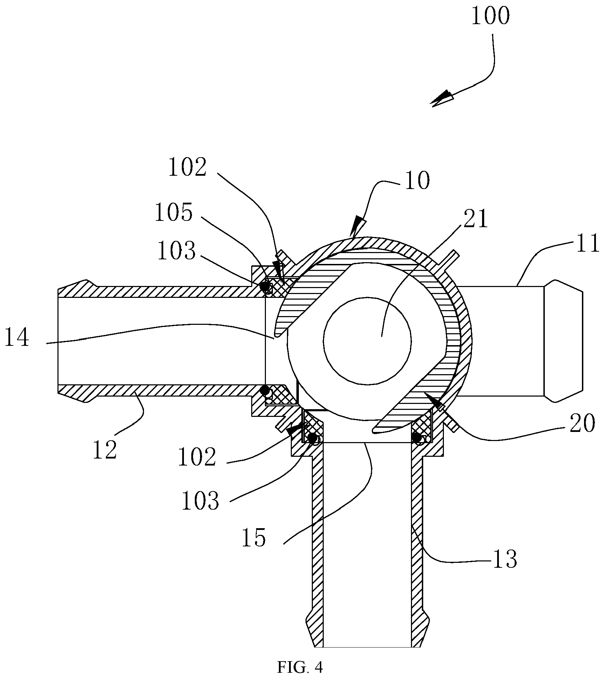

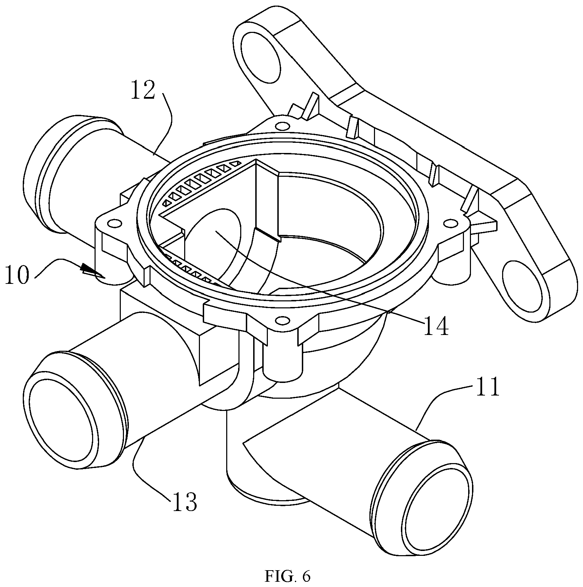

Referring to FIG. 1 to FIG. 8, the present disclosure provides a three-way water valve 100, which is configured for pipe switching in a pipe system. In this embodiment, the three-way water valve 100 is applied in an automotive thermal management system. In other embodiments, the three-way water valve 100 can be further applied in pipe systems such as heat supply, water supply and drainage.

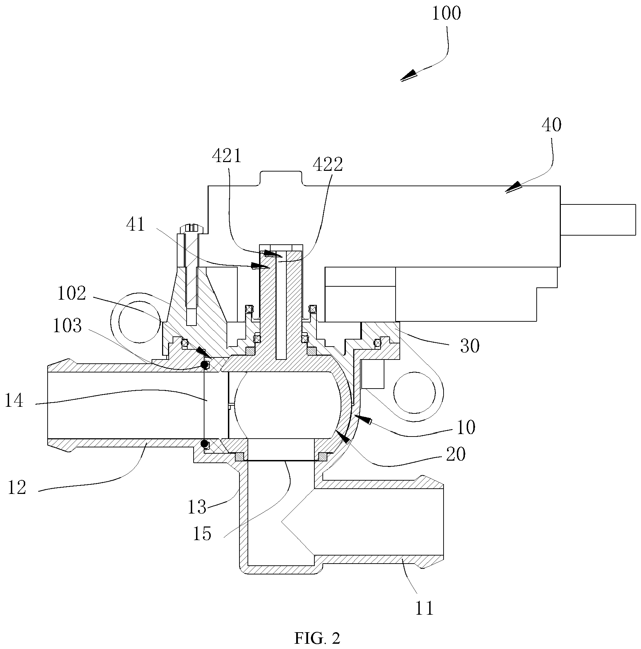

Referring to FIG. 1 and FIG. 2, the three-way water valve 100 includes a valve seat 10, a valve core 20 provided in the valve seat 10, a valve bonnet 30 covering the valve seat 10 and an actuator 40 fixed on the valve bonnet 30. The actuator 40 can drive the valve core 20 to rotate in the valve seat 10, so as to control flow when the three-way water valve 100 is operated.

Specifically, a bottom surface of the valve core 20 is provided with a first connecting port 21, a side wall of the valve core 20 is provided with a second connecting port 22, and the first connecting port 21 is communicating with the second connecting port 22.

Correspondingly, a bottom of the valve seat 10 is connected with a first connecting branch pipe 11, and a side wall of the valve seat 10 is connected with a second connecting branch pipe 12 and a third connecting branch pipe 13. The first connecting branch pipe 11 is always communicating with the first connecting port 21 of the valve core 20. At least one of the second connecting branch pipe 12 and the third connecting branch pipe 13 can be communicating with the second connecting port 22 of the valve core 20. In this embodiment, the first connecting branch pipe 11 is used as an inlet, and the second connecting branch pipe 12 and the third connecting branch pipe 13 are used as an outlet. In other embodiments, the first connecting branch pipe 11 can be used as an outlet, and one of the second connecting branch pipe 12 and the third connecting branch pipe 13 can be used as an inlet depending on different designs or requirement.

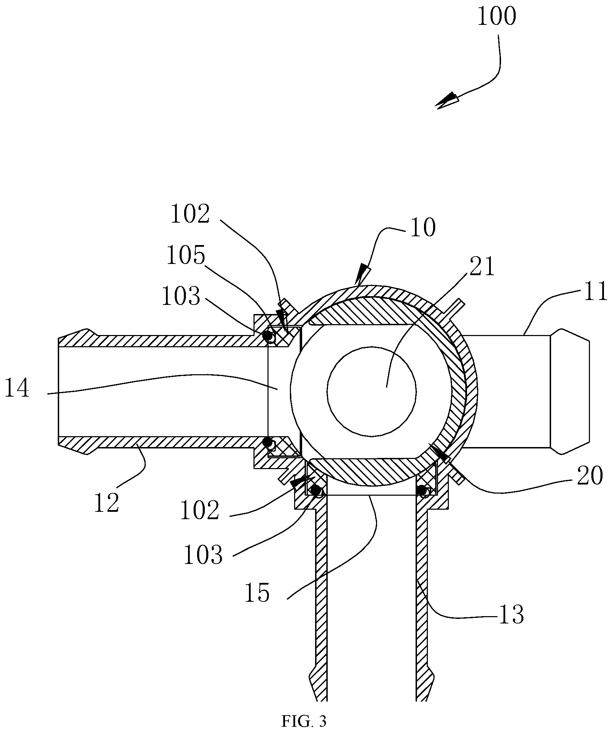

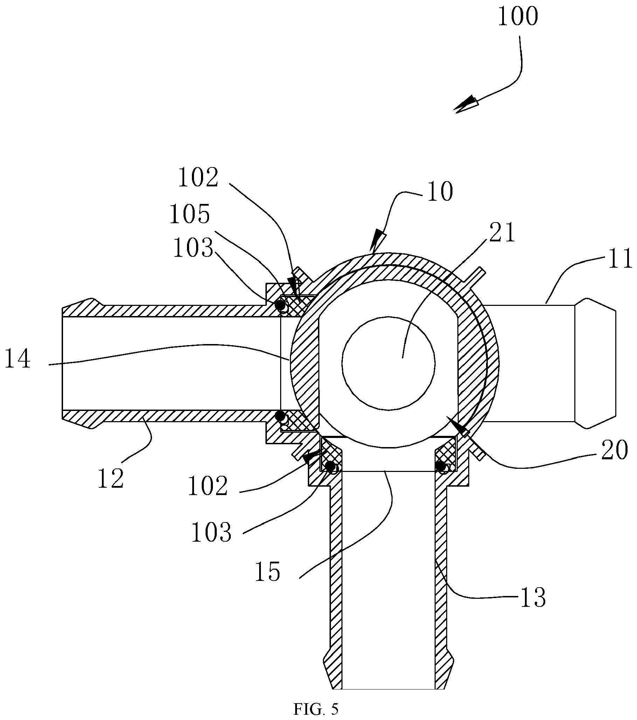

Referring to FIG. 3 and FIG. 5, when the actuator 40 drives the valve core 20 to rotate in the valve seat 10, the three-way water valve of the present disclosure can realize the following three ways: (a) the first connecting branch pipe 11 is communicating with the second connecting branch pipe 12 by the first connecting port 21 and the second connecting port 22 of the valve core 20; (b) the second connecting branch pipe 12 is communicating with the third connecting branch pipe 13 by the first connecting port 21 and the second connecting port 22 of the valve core 20; and (c) the first connecting branch pipe 11 is communicating with the second connecting branch pipe 12 by the first connecting port 21 of the valve core 20 and communicating with the third connecting branch pipe 13 by the second connecting port 22 of the valve core 20, i.e., the first connecting branch pipe 11 is communicating with both the second connecting branch pipe 12 and the third connecting branch pipe 13. Such that, it can realize flow control by switching the ways on the three-way water valve 100 when the three-way water valve 100 is operated.

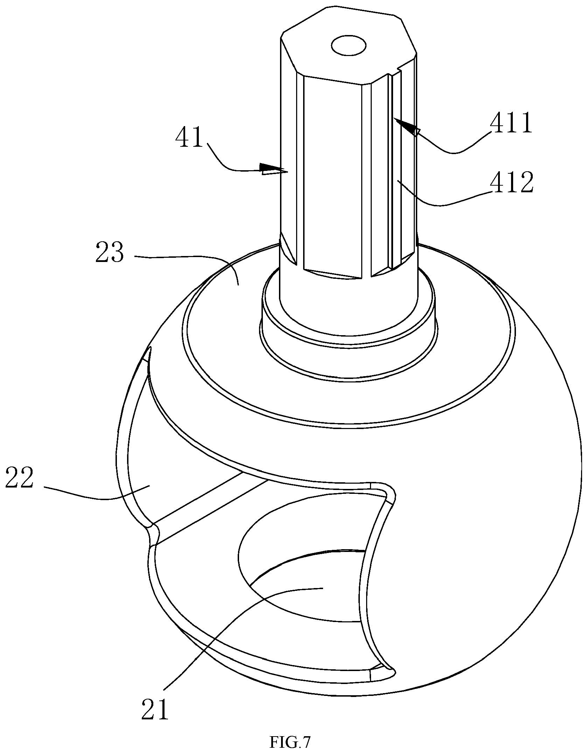

Referring to FIG. 7, in this embodiment, a cross section of the second connecting port 22 of the valve core 20 is in a shape of a square. A cross section of the valve core 20 is in a shape of a square, that is, the cross section of the second connecting port 22 is the same as that of the valve core 20, resulting in that a diameter or size of the second connecting port 22 on the valve core 20 can be as great as possible, and an inner cavity of the valve core 20 is sufficiently used and a circulation area of the inner cavity is as large as possible to increase a circulation flux. In other embodiments, the cross section of the second connecting port 22 can be disposed to other shapes according to the cross section of the valve core 20.

The valve seat 10 is further provided with a first valve port 14 and a second valve port 15, the second connecting branch pipe 12 is connected with the first valve port 14, the third connecting branch pipe 13 is connected with the second valve port 15, and the valve core 20 can be communicating with both the first valve port 14 and the second valve port 15 by the second connecting port 22, resulting in that when the first connecting branch pipe 11 on the valve seat 10 is communicating with the second connecting branch pipe 12 and the third connecting branch pipe 13 at the same time, the second connecting branch pipe 12 and the third connecting branch pipe 13 have a large enough flow out, so as to realize a full flow of three connecting branch pipes on the valve seat 10. At the same time, the arrangement of the second connecting port 22 on the valve core 20 can allow injection-molded products fully filled during injection molding, so as to improve an overall injection molding effect of the valve core 20.

The first valve port 14 and the second valve port 15 are provided with a first sealing member 201 and a second sealing member 202, respectively, resulting in that the valve core 20 and the valve seat 10 are sealing connected with each other, so as to realize an integral, leak-proof sealing property for the three-way water valve 100.

In an embodiment of the present disclosure, the first sealing member 201 can be a sealing gasket 102, and the second sealing member 202 can be an O-shaped ring 103. The sealing gasket 102 is disposed on the valve seat 10, an end surface of the sealing gasket 102 away from the valve core 20 is provided with a sealing groove 105, the O-shaped ring 103 is embedded in the sealing groove 105, and an end surface of the sealing gasket 102 away from the O-shaped ring 103 is defined as a sealing surface to abut against the valve seat 10, so as to realize the assembly sealing effect between the valve seat 10 and the valve core 20.

It can be understood that the assembly sealing effect between the valve seat 10 and the valve core 20 is realized by other sealing members as required and not limited to the above sealing gasket 102 and O-shaped ring 103. For example, the first sealing member 201 can be made of other sealing materials with lower hardness and is disposed on the valve seat 10, and the second sealing member 202 can be made of other materials with wear resistance and low friction coefficient and fitted with the first sealing member 201.

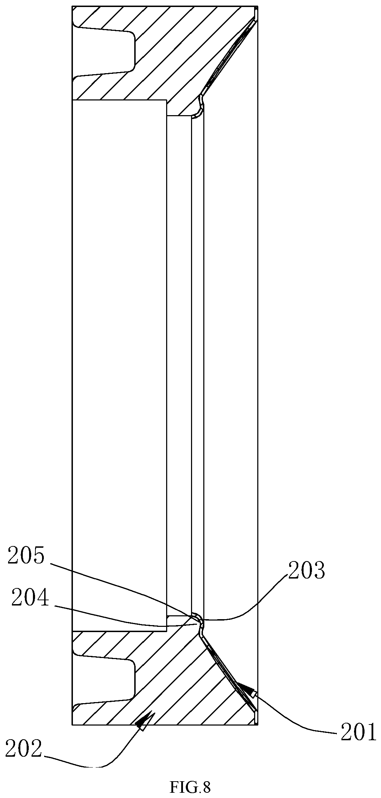

Referring to FIG. 8, in an embodiment of the present disclosure, furthermore, the first sealing member 201 is disposed closed to the valve core 20 relative to the second sealing member 202, a first sealing convex portion 203 is disposed on an end of the first sealing member 201 closed to the first valve port 14 or the second valve port 15, and the first sealing convex portion 203 is capable of abutting against the valve core 20. It can be understood that the first sealing convex portion 203 can improve an interaction force when the first sealing member 201 abuts against the valve core 20, thus ensuring a sealing effect of the first sealing member 201 and the second sealing member 202 on the assembly sealing between the valve core 20 and the valve seat 10.

The second sealing member 202 is provided with a second sealing convex portion 205, the second sealing convex portion 205 is provided with a first sealing groove 204 which is matched with the first sealing convex portion 203, and the first sealing groove 204 is located in an inner side of the second sealing convex portion 205. The second sealing convex portion 205 can further improve the force between the first sealing member 201 and the valve core 20 when the first sealing member 201 abuts against the valve core 20, and the first sealing convex portion 203 is disposed in the first sealing groove 204, which allows the first sealing member 201 being fitted with the second sealing member 202, so as to improve the sealing effect between the first sealing member 201 and the second sealing member 202.

An end of the valve core 20 is provided with a rotating shaft 41. The rotating shaft 41 is connected with the valve core 20 and the two are regarded as a whole. The actuator 40 is provided with a driving portion 42, the driving portion 42 is rotatably connected with an end of the rotating shaft 41 away from the valve core 20, and the driving portion 42 can circumferentially limit the rotating shaft 41. In other words, in the three-way water valve of this embodiment, the rotating shaft 41 and the valve core 20 is regarded as an integral structure, the rotating shaft 41 is configured to drive the valve core 20 to rotate in the valve seat 10. It should be noted that the rotating shaft 41 and the valve core 20 can be connected as the integral structure by a welding process, and the valve core 20 and the rotating shaft 41 can also be prepared by an integral molding process.

It can be seen from the above that the valve core 20 is connected with the rotating shaft 41 as a whole, so as to improve a connecting strength between the rotating shaft 41 and the valve core 20, ensuring that the valve core 20 can rotate when the actuator 40 is operated. When the valve core 20 rotates in the valve seat 10, the rotating shaft 41 and the valve core 20 rotate at the same time, and a rotating angle of the rotating shaft 41 is always consistent with a rotating angle of the valve core 20. This avoids an assembly error between the rotating shaft 41 and the valve core 20, or a difference in rotation angle between the rotating shaft 41 and the valve core 20 caused by wear in the process of use. In this way, a rotating accuracy of the valve core 20 driven by the actuator 40 is improved, and an accuracy of flow control of the three-way water valve 100 is ensured.

Furthermore, the rotating shaft 41 is provided with a first limiting portion 411, and the driving portion 42 of the actuator 40 is provided with a second limiting portion 421. When the rotating shaft 41 is assembled and connected with the driving portion 42 of the actuator 40, the first limiting portion 411 can be matched with the second limiting portion 421. In other words, when the rotating shaft 41 is assembled mutually with the driving portion 42 of the actuator 40 in this embodiment, an assembly position of the rotating shaft 41 on the actuator 40 is determined. So that the actuator 40 can drive the valve core 20 to rotate in the valve seat 10 by the rotating shaft 41.

It should be noted that in other embodiments, the three-way water valve can further be provided with an angle sensor (not shown), which is disposed in a position where the actuator 40 is matched with the rotating shaft 41. When the actuator 40 drives the valve core 20 to rotate by the rotating shaft 41, the angle sensor can feedback a signal, thus further improving a precise control of the rotation angle when the valve core 20 rotates in the valve seat 10.

Specifically, the first limiting portion 411 can be a positioning bulge 412 located on an outer lateral wall of the rotating shaft 41, and the second limiting portion 421 can be a position groove 422 located on the driving portion 42. The positioning bulge 412 can be matched with the positioning groove 422 to achieve the circumferential limit for the rotating shaft 41. It should be noted that a part of the rotating shaft 41 configured for matching with the driving portion 42 of the actuator 40 is not single, and the part can be disposed at different positions of the driving portion 42. The positioning bulge 412 can be specifically disposed on one of the side walls of the rotating shaft 41.

A first guiding member 104 is disposed between the valve core 20 and the valve seat 10, a second guiding member 104 is disposed between the valve core 20 and the valve bonnet 30, the valve core 20 is provided with a first guiding portion 23 matched with the first guiding member 104, and a second guiding portion 23 matched with the second guiding member 104 respectively. The first guiding member 104 and the first guiding portion 23 are configured to guide the rotating of the valve core 20, as well as the second guiding member 104 and the second guiding portion 23. In this way, a positioning accuracy of the valve core 20 of the three-way water valve 100 in the valve seat 10 and the valve bonnet 30 can be improved, the service life of the valve core 20 can be extended, and the friction force of the valve core 20 can be reduced when the valve core 20 rotates.

Specifically, the first guiding member 104 and the second guiding member 104 are slidably connected with the valve core 20 respectively, and the first guiding member 104 and the second guiding member 104 can be a sealing ring respectively. In other words, the valve core 20 is assembled and positioned in the valve seat 10 and the valve bonnet 30 by the sealing ring in this embodiment, and when the actuator 40 drives the valve core 20 to rotate, the valve core 20 can rotate relative to the sealing ring.

In other embodiments, the first guiding member 104 and the second guiding member 104 can be a bearing respectively, so as to realize a rotating connection of the valve core 20 relative to the valve seat 10 and the valve bonnet 30. The present disclosure does not limit the first guiding member 104 and the second guiding member 104 to the above two structures, the first guiding member 104 and the second guiding member 104 can also be others, as long as they can reduce the friction caused by the rotating of the valve core 20.

In the three-way water valve 100 provided in the present disclosure, the rotating shaft 41 is integrated with the valve core 20 to strengthen the connecting strength between the rotating shaft 41 and the valve core 20 and extend the service life of the valve core 20. Meanwhile, the integrated structure of the valve core 20 and the rotating shaft 41 can ensure that the valve core 20 and the rotating shaft 41 can rotate at the same time, improving the rotating accuracy of the valve core 20 driven by the actuator 40.

The technical features of the above-described embodiments may be combined in any combination. For the sake of brevity of description, all possible combinations of the technical features in the above embodiments are not described. However, as long as there is no contradiction between the combinations of these technical features, all should be considered as within the scope of this disclosure.

The above-described embodiments are merely illustrative of several embodiments of the present disclosure, and the description thereof is relatively specific and detailed, but is not to be construed as limiting the scope of the disclosure. It should be noted that a plurality of variations and modifications may be made by those skilled in the art without departing from the spirit and scope of the disclosure. Therefore, the scope of the disclosure should be determined by the appended claims.

## Claims

1. A three-way water valve, comprising a valve seat, a valve core provided in the valve seat, a valve bonnet covering the valve seat and an actuator; the actuator being fixed on the valve bonnet, the actuator being able to drive the valve core to rotate in the valve seat, the actuator being provided with a driving portion, wherein
the three-way water valve further comprises a rotating shaft connected with the valve core as a whole, wherein a first end of the rotating shaft is disposed on the valve core, a second end of the rotating shaft is rotatably connected with the driving portion, and the driving portion is capable of circumferentially limiting the rotating shaft.

2. The three-way water valve of claim 1, wherein the rotating shaft is provided with a first limiting portion, and the driving portion is provided with a second limiting portion; when the rotating shaft is assembled and connected with the driving portion, the first limiting portion is capable of matching with the second limiting portion.

3. The three-way water valve of claim 2, wherein the first limiting portion is a positioning bulge located on an outer lateral wall of the rotating shaft, and the second limiting portion is a position groove located on the driving portion.

4. The three-way water valve of claim 1, wherein a first guiding member is disposed between the valve core and the valve seat, a second guiding member is disposed between the valve core and the valve bonnet, the valve core is provided with a first guiding portion matched with the first guiding member, and a second guiding portion matched with the second guiding member respectively.

5. The three-way water valve of claim 4, wherein the first guiding member and the second guiding member are slidably connected with the valve core respectively, and the first guiding member and the second guiding member comprise a sealing ring respectively.

6. The three-way water valve of claim 4, wherein the first guiding member and the second guiding member comprise a bearing respectively.

7. The three-way water valve of claim 1, wherein a bottom surface of the valve core is provided with a first connecting port, a side wall of the valve core is provided with a second connecting port, and the first connecting port is in communication with the second connecting port.

8. The three-way water valve of claim 7, wherein a cross section of the second connecting port is in a shape of square, the valve seat is provided with a first valve port and a second valve port, and the valve core is capable of communicating with the first valve port and the second valve port at the same time by the second connecting port.

9. The three-way water valve of claim 8, wherein the first valve port and the second valve port are both provided with a first sealing member and a second sealing member, resulting in that the valve core and the valve seat are sealing connected with each other.

10. The three-way water valve of claim 9, wherein the first sealing member comprises a sealing gasket, the second sealing member comprises an O-shaped ring, the sealing gasket is disposed on the valve seat, the O-shaped ring is embedded in a first end surface of the sealing gasket which abuts against the valve seat, and a second end surface away from the O-shaped ring of the sealing gasket abuts against the valve core.

11. The three-way water valve of claim 9, wherein the first sealing member is disposed closed to the valve core, a first sealing convex portion is disposed on an end of the first sealing member closed to the first valve port or the second valve port, and the first sealing convex portion is capable of abutting against the valve core.
